# EUROPEAN PATENT SPECIFICATION

(11) **EP 2 481 557 B1**
(45) Date of publication and mention of the grant of the patent: **11.07.2018**
(21) Application number: 11195354.3
(22) Date of filing: 22.12.2011
(51) Int. Cl.: B29C 70/38, B29C 70/44, B29C 70/48

(54) **Composite layup method**
Verfahren zur Verbundstofflaminierung
Procédé pour l'empilage d'un materiau composite

(30) Priority: 26.01.2011 GB 201101332; 26.01.2011 US 201161436261 P
(43) Date of publication of application: 01.08.2012
(73) Proprietor: Vestas Wind Systems A/S, 8200 Aarhus N (DK)
(72) Inventor: Holloway, Gary, Cowes, PO31 7EG (GB)
(74) Representative: Vestas Patents Department

(56) References cited:
- EP-A1- 2 821 208
- DE-A1- 4 002 087

## Description

### Technical field

The present invention relates to composite layup techniques suitable for laying up large composite structures such as modern wind turbine blades.

### Background

Until recently, large composite structures such as the blades of modern wind turbines have generally been created using manual layup techniques. This involves arranging mats or plies of reinforcing fibrous material in large moulds by hand. Several layers of fibrous material are arranged in the mould. The mats typically comprise glass or carbon fibres. Once the mats have been arranged in the mould, resin is supplied to the mould using a technique such as resin transfer moulding (RTM) or vacuum-assisted resin transfer moulding (VARTM). Alternatively, the mats may be pre-impregnated with resin, i.e. prepreg, which dispenses with the need to supply resin to the mould. In any event, the layup is generally subjected to a vacuum-assisted and temperature-controlled consolidation and curing process.

There is a continual drive to increase the power output of modern wind turbines. To this end, larger wind turbines are being produced, which require larger blades. As the size of the blades increases, manual layup techniques become less suitable. For example, due to the curvature of wind turbine blades, reaching the edges of very large moulds manually would require scaffolding or persons being suspended high above the factory floor. This can make manual techniques unfeasible.

Presently, automated layup techniques are being considered for the production of modern wind turbine blades. Typically, this involves the use of robots arranged to move on tracks adjacent the moulds or upon gantries above the moulds. The robots are programmed to perform tasks such as applying gel coats to the moulds, laying up fibrous material in the mould, and painting the cured laminates. Robots are able to reach parts of the mould that are difficult to reach manually. In addition, the use of automated procedures can increase the speed, accuracy and repeatability of the layup process, and results in parts having a higher quality and consistency.

One example of an automated layup technique involves laying a continuous strip of prepreg material in a mould using a deposition end effector assembly mounted on the end of a robotic arm or on a gantry. Whilst this technique works well on flat surfaces, the technique presents particular challenges when employed on curved surfaces such as the surface of a wind turbine blade mould. For example, applying a strip of material to a curved, or otherwise uneven surface can result in air becoming trapped beneath the material as it is laid. This often causes wrinkles to develop in the material during consolidation, which may compromise the structural integrity of the finished blade. From DE4002087, there is known a method and apparatus for depositing pre-impregnated fibrous material on a double-curved surface, in particular a spherical surface. Material is drawn from a supply roll and passed over a passively deformable roll - itself shaped by a curved anvil roll - before being deposited on the double-curved surface by means of a pressing roll.

The present invention provides a solution to the aforementioned problem.

### Summary of the invention

According to the invention there is provided a composite layup method in which strips of fibrous material are each deposited progressively on a mould surface, the method comprising: feeding a strip of fibrous material along a path extending from a supply of the fibrous material to a placement device for placing the strip progressively on the mould surface; and imparting a shape to the strip within the path, while maintaining the length of the strip within the path substantially uniform across the width of the strip, wherein the shape imparted to the strip corresponds at least partially to a shape of the mould surface.

In the case of fibrous material containing fibres which are directed along the length of the strip, by maintaining the length of the strip substantially uniform across its width, this will prevent variations in the tension of the strip across the width, which may cause distortions within the fibrous material, which, in turn, could cause buckling of the material within the mould.

The invention also provides an end effector assembly for use in composite layup, the assembly being configured to deposit strips of fibrous material progressively on a mould surface, and the assembly comprising: a placement device for placing a strip of fibrous material on the mould surface; a feed mechanism for feeding the strip along a path extending from a supply of the fibrous material to the placement device; and a shaping device located within the path and configured to impart a shape to the strip while maintaining the length of the strip within the path substantially uniform across the width of the strip, wherein the shape imparted to the strip corresponds at least partially to a shape of the mould surface.

Shaping the pre-deposited material to correspond to the shape of the mould surface ensures that the strip is placed flush against the mould surface across the full width of the strip, despite any curvature in the mould surface. This effectively prevents air from becoming trapped between the strip and the mould as the strip is laid.

The method comprises imparting a curvature to the strip. In this respect, the shaping device is suitably configured to impart the requisite curvature. The curvature is imparted in a direction transverse to a direction in which the strip is laid in the mould, i.e. transverse to a direction of progression of the placement device. Shaping the strip in this way is suitable for laying up wind turbine blades, which are formed in curved moulds.

The shaping device comprises shaping rollers over which the strip of material is fed. The shaping device includes a series of rollers. The rollers are arranged in a curved formation, similar to troughing idlers, which are commonly found in conveyor belt systems, albeit for a different purpose. The rollers may rotate about a common shaft, which may be curved. Preferably, the shaping device comprises a set of garland troughing idlers. Garland troughing idlers generally take the form of a set of rollers that rotate on respective individual shafts, which are connected end-to-end in the form of a chain. Each end of the chain may be attached to a mounting point on the end effector assembly, and the chain preferably hangs between the mounting points in a shallow U-shape. Alternatively fixed roller mountings may be used.

The strip of fibrous material may be fed over the rollers, i.e. through the U-shape, such that the rollers impart a curvature to the material immediately before it reaches the placement device.

The placement device may comprise one or more placement rollers, and preferably comprises a series of placement rollers. The rollers are configured to roll against the material as it is deposited. Hence, in use, the placement device is separated from the mould surface by the thickness of the deposited material. Advantageously, the placement device may be capable of displacement in a direction normal to the mould surface, akin to a vehicle suspension system. This enables the placement device to adapt to varying contours of the mould surface and ensures that an even pressure is applied across the width of the material as it is deposited in the mould. To this end, the placement rollers may comprise fluid-filled bags. The fluid may be gas or liquid. Preferably it is gas, and most preferably air. Rollers in the form of air-filled bags are flexible and can displace normal to the mould surface as required. Another way of achieving the desired normal displacement is for the rollers to be attached to suitable actuation means. For example, each placement roller may be attached to a hydraulic or pneumatic actuator, or to a spring. With this arrangement, rigid placement rollers may be employed.

The series of placement rollers preferably includes one or more central placement rollers located between respective first and second sets of peripheral rollers, which may also be referred to as side rollers or 'wing' rollers. The first and second sets of peripheral rollers may each include one or more rollers. The placement rollers are preferably arranged in a chevron or V-shaped formation, in which the or each central placement roller is located ahead of the peripheral placement rollers in a direction of advancement of the placement device across the mould surface. Hence, the method preferably includes advancing a central placement roller ahead of peripheral placement rollers. The effect of this is to smooth the deposited strip of fibrous material outwards from its centre to its edges as it is laid in the mould. This ensures that any air that does become trapped between the strip and the mould is expelled effectively.

Preferably the fibrous material is continuously supplied to the placement device. To this end, the fibrous material may be stored as a continuous length on a spool, i.e. as a roll, as part of the end effector assembly. Shaping of the fibrous material occurs on-the-fly, at a point between the roll and the placement device, immediately before the strip is placed in the mould.

The shaping device and the placement device operate synergistically to prevent wrinkles developing in the deposited material. Shaping the material to conform to the contour of the mould surface immediately prior to deposition minimises the potential for trapped air, whilst smoothing the deposited material from the centre outwards expels any air that may nevertheless become trapped.

The method and apparatus of the present invention are suitable for laying up any variety of fibrous reinforcing material, including dry fibres and prepreg. The fibres may be carbon, glass, aramid or any other suitable reinforcing fibre. Preferably the fibrous material is a prepreg material, for example a prepreg ply. Prepreg materials tend to be sticky, and hence generally include a backing layer on one or both surfaces. The shaping device is preferably configured to remove a first backing layer from the material prior to the material being deposited in the mould. The placement device may be configured to remove a second baking layer from the material as the material is deposited in the mould.

The method and the end effector assembly may be employed in fully automated or semi-automated manufacturing schemes. In semi-automated schemes, at least one step is carried out manually. The end effector may be mounted on the end of a robotic arm or on a gantry arranged above the mould. The end effector may be computer controlled and move in accordance with a set of pre-programmed instructions.

### Brief description of the drawings

The invention will now be described in further detail by way of example to the following drawings in which:
Figure 1 is a schematic side view of a deposition end effector assembly in accordance with the present invention, the assembly including a series of placement rollers and a series of shaping rollers;
Figure 2 is a perspective view of the placement rollers of the end effector assembly of Figure 1; and
Figure 3 is a perspective view of the shaping rollers of the end effector assembly of Figure 1.

### Detailed description

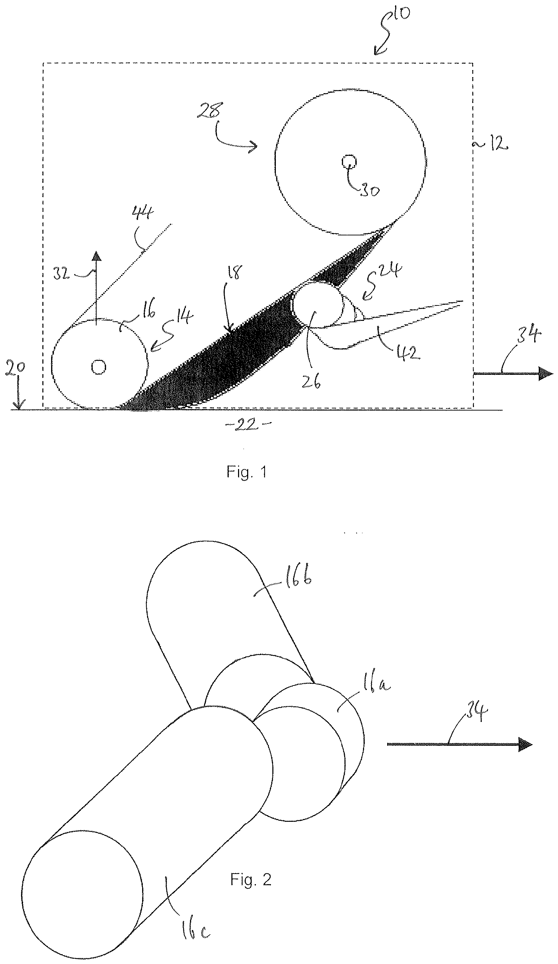

Referring to Figure 1, a deposition end effector assembly 10 in accordance with the present invention is shown schematically in side view. The assembly 10 comprises a housing 12, indicated by the dashed line, which supports a placement device 14 comprising a series of placement rollers 16 for placing a strip of prepreg fibrous material 18 on a surface 20 of a mould 22. The assembly 10 also includes a shaping device 24 comprising a series of shaping rollers 26 for pre-shaping the prepreg strip 18 prior to placement in the mould 22.

Whilst not shown in Figure 1, the assembly 10 is typically mounted at the end of a robotic arm or gantry arranged to move above the mould 22. The end effector assembly 10 is traversed across the surface 20 of the mould 22 by the robotic arm or gantry, in accordance with a series of pre-programmed instructions. As it moves, the end effector 10 deposits the strip of prepreg fibrous material 18 on the surface 20 of the mould 22, or on a previously deposited prepreg layer.

The end effector assembly 10 includes a supply of prepreg material in the form of a roll 28. The roll 28 comprises a continuous length of prepreg ply wound around a spool 30. The prepreg material typically has a width of between 0.3 to 1.5 metres. In this example, the ply is pre cut to shape and length, however in other examples the end effector assembly 10 may include means for cutting the prepreg material 18, for example when the end effector reaches the end of the mould, prior to placing the next strip.

Referring to Figure 2, as mentioned above the placement device 14 comprises a series of placement rollers 16a, 16b, 16c, which may also be referred to in the art as compaction or consolidation rollers. The placement rollers 16a, 16b, 16c are arranged to roll across the surface 20 of the mould 22, or over a previously deposited layer, and effect placement of the strip of prepreg material 18 in the mould 22.

Wind turbine blades are made in curved moulds. The blades, and hence the moulds, have a relatively complicated surface geometry, and typically exhibit a double curvature, i.e. they are curved both in a transverse direction between the leading and trailing edges of the blade, and longitudinally, between the root and tip of the blade. To ensure that the placement rollers 16a, 16b, 16c exert an even pressure across the width of the prepreg strip 18 despite this curvature, the rollers 16a, 16b, 16c are formed from air-filled bags. The rollers 16a, 16b, 16c are compressible to an extent, which allows them to be displaced in a direction normal to the surface 20 of the mould 23, as represented by the arrow 32 in Figure 1. This action is akin to the suspension system of a vehicle, and allows the end effector assembly 10 to accommodate curvature or undulations in the mould surface 20.

The placement rollers 16a, 16b, 16c comprise a central roller 16a located between first and second peripheral rollers 16b, 16c, also referred to as 'wing' rollers. The rollers 16a, 16b, 16c are arranged in a chevron, or V-shaped formation, with the central roller 16a being located ahead of the peripheral rollers 16b, 16c in the direction of progression of the assembly 10 as represented by the arrow 34 in Figures 1 and 2. The central roller 16a rotates about a central axis, whilst the first and second peripheral rollers 16b, 16c rotate about respective first and second peripheral axes which are each transverse to the direction of progression 34 and transverse to the central axis. In this arrangement, the peripheral rollers slide over the strip to an extent to effect smoothing. This sliding action mimics the manual lay-up technique in which a deposited strip is smoothed out on the mould surface by a person's hands moving across the strip, from the centre outwards, in a sliding motion. In other examples, the peripheral rollers 16b, 16c may be segmented and staggered and rotate about respective peripheral axes that are parallel to the central axis.

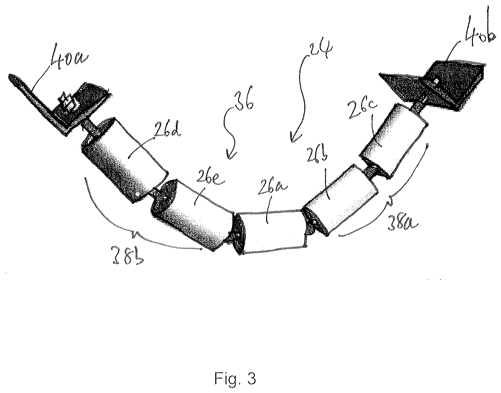

Advancing the central roller 16a ahead of the peripheral rollers 16b, 16c has the effect of smoothing the prepreg strip 18 outwards from a central region towards its edges. This reduces wrinkles when the strip 18 is laid upon regions of the mould having a curvature transverse to the direction of progression 34. Wrinkles are further prevented by virtue of the shaping device 24, which pre-shapes the strip 18 to conform to the curvature of the mould 22 immediately prior to the strip 18 being placed in the mould 22. The shaping device 24 will now be described in more detail with reference to Figure 3.

Referring to Figure 3, as mentioned above the shaping device 24 comprises a series of shaping rollers 26a-e. Each roller 26a-e rotates on a respective axle, and the axles are joined end to end to form a chain of rollers 36. In this example, the chain 36 includes five rollers 26a-e. A central roller 26a is arranged between first and second groups 38a, 38b of peripheral rollers 26b-e. Each group 38a, 38b includes two peripheral rollers 26b, 26c and 26d, 26e respectively. The ends of the chain 36 are mounted to respective mounting points 40a, 40b on the housing of the end effector assembly 10. The chain of rollers 36 hangs between the two mounting points 40a, 40b and adopts a shallow U-shaped curvature, in which the central roller 26a occupies a lowermost position and the first and second groups 38a, 38b of peripheral rollers 26b-e, occupy relatively higher positions, closer to the mounting points 40a, 40b. In this configuration, the shaping rollers 26a-e are known as 'garland troughing idlers', and are similar to those used in conveyor-belt systems, albeit for a different purpose. In other examples, fixed rollers may be employed in place of the garland troughing idlers.

The end effector assembly 10 includes a feed mechanism for feeding the prepreg material 18 from the prepreg roll 28, over the garland idlers 26a-e, and to the placement rollers 16a-c. The garland idlers 26a-e, which are located between the prepreg roll 28 and the placement rollers 16a-c, serve to pre-shape the length of material 18 immediately before it reaches the placement rollers 16a-c, at which point it is deposited in the mould 22. With such an arrangement, it will be appreciated that the path length of the prepreg material 18 between the prepreg roll 28 and the surface 20 of the mould 22 will remain substantially uniform across the with of the prepreg material 18, and thereby the tension along the length of the prepeg material 18 will also remain substantially uniform across its width. The U-shape curvature adopted by the garland idlers 26a-e corresponds to the transverse curvature of the mould 22.

As the prepreg strip 18 is fed over the garland idlers 26a-e, i.e. through the U-shape, the idlers 26a-e impart a curvature to the strip 18 corresponding to the transverse curvature of the mould surface 20. The effect of this is to ensure that the full width of the prepreg strip 18 is placed flush against the mould surface 20 at substantially the same time. Without this pre-shaping, the edges of the strip 18 would come into contact with the curved mould surface 20 before the central region of the strip 18, resulting in air being trapped beneath the strip 18.

Wrinkles are effectively prevented from developing in the laminate layup due to the synergistic action of the shaping device 24 and the placement device 14. The shaping device 24 pre-shapes the prepreg strip 18, which ensures that the full width of the strip 18 comes into contact with the mould surface 20 at the same moment, hence minimising the possibility of air becoming trap, whilst the placement rollers 16a-c arranged in the chevron formation ensure that the strip 18 is smoothed outwards from its centre, thus expelling any air that may have become trapped.

In addition to the functions described above, the placement rollers 16a-c and the shaping rollers 26a-e also serve to remove protective backing layers from the prepreg ply 18 during layup. Prepreg plies are sticky and so generally include upper and lower protective backing layers, which protect the plies during storage and enable the plies to be wound on a roll and easily unwound when required. Referring again to Figure 1, a lower backing layer 42 is removed as the prepreg strip 18 is fed over the garland troughing idlers 26a-e. The lower backing layer 42 is looped around the garland troughing idlers 26a-e, which peel the lower backing layer 42 away from the prepreg strip 18 before the strip reaches the placement rollers 16a-c. An upper backing layer 44 is looped around the placement rollers 16a-c, which peel the upper backing layer 44 from the prepreg strip 18 as the strip is placed in the mould 22.

It will be appreciated that the method and apparatus described above are suitable for use in fully automated composite layup techniques and semi-automated layup techniques. In semi-automated techniques, one or more steps in the fabrication of a composite structure are performed manually.

Whilst the present invention has been described in connection with the manufacture of wind turbine blades, it will be appreciated that the invention may be employed in the manufacture of other composite articles, for example aircraft components including wings and fuselages.

Many modifications may be made to the specific example described above without departing from the scope of the present invention as defined by the accompanying claims. For example, in other embodiments the placement device 14 may have more than three rollers 16a-c. These rollers are not necessarily air-filled bags, but may be otherwise flexible. For example, rigid rollers may be used in conjunction with a suitable suspension system such as hydraulic or pneumatic actuators or springs, or intrinsically flexible rollers could be used, such as rubber or foam rollers. Other suitable shaping devices may be substituted for the garland troughing idlers 26a-e. For example, other types of troughing idler may be used in which the individual rollers are located on a common shaft. Also, the shaping rollers 26a-e could be substituted with a suitably-shaped die.

## Claims

1. A composite layup method in which strips of fibrous material (18) are each deposited progressively on a mould surface (22), the method comprising:
feeding a strip of fibrous material (18) along a path extending from a supply (28) of the fibrous material to a placement device (14) for placing the strip (18) progressively on the mould surface (22); and
imparting a shape to the strip (18) within the path, while maintaining the length of the strip (18) within the path substantially uniform across the width of the strip (18), wherein the shape imparted to the strip (18) corresponds at least partially to a shape of the mould surface (22),
said method comprising imparting a curvature to the strip (18), wherein imparting said curvature to the strip (18) is achieved by feeding the strip (18) over a set of shaping rollers comprising a series of rollers (26a-26e) arranged in a curved formation in a direction transverse to a direction (34) in which the strip is deposited progressively on the mould surface (22), thereby imparting said curvature in a direction transverse to a direction (34) in which the strip is deposited progressively on the mould surface (22).

2. The method of claim 1, wherein the method comprises shaping the strip (18) on the fly, immediately before the strip is placed in the mould (20).

3. The method of any preceding claim, further comprising smoothing the deposited strip (18) outwards from its centre to its edges as it is deposited in the mould (20).

4. The method of Claim 3, comprising advancing a central placement roller (16a) of the placement device (14) ahead of peripheral placement rollers (16b, 16c) in a direction of progression (34) of the placement device (14).

5. The method of any preceding claim, further comprising removing a first backing layer (42) from the strip (18) at a location along the length of the strip (18) upstream from the placement device (14), at which location shape is imparted to the strip (18).

6. An end effector assembly (10) for use in composite layup, the assembly being configured to deposit strips of fibrous material (18) progressively on a mould surface (20), and the assembly (10) comprising:
a placement device (14) for placing a strip of fibrous material (18) on the mould surface (22); a feed mechanism for feeding the strip (18) along a path extending from a supply (28) of the fibrous material to the placement device (14); and
a shaping device (24) located within the path and configured to impart a shape to the strip (18) while maintaining the length of the strip (18) within the path substantially uniform across the width of the strip (18), wherein the shape imparted to the strip (18) corresponds at least partially to a shape of the mould surface (22), wherein the shaping device (24) is configured to impart a curvature to the strip (18) and, wherein the shaping device (24) comprises shaping rollers comprising a series of rollers (26a-26e) arranged in a curved formation in a direction transverse to a direction (34) in which the strip is deposited progressively on the mould surface (22), said rollers (26a-26e) over which the strip of material (18) is fed thereby imparting said curvature to the strip (18) in a direction transverse to a direction of progression (34) of the end effector assembly across the mould surface (22).

7. The end effector assembly (10) of Claim 6, wherein the shaping rollers (26a-26e) are troughing idlers.

8. The end effector assembly (10) of Claim 7, wherein the shaping rollers (26a-26e) are garland troughing idlers.

9. The end effector assembly (10) of any of Claims 6-8, wherein the placement device (14) is capable of displacement in a direction normal to the mould surface (22).

10. The end effector assembly (10) of any of Claims 6-9, wherein the placement device (14) comprises one or more placement rollers (16a, 16b, 16c).

11. The end effector assembly (10) of Claim 10, wherein the placement rollers (16a, 16b, 16c) comprise fluid-filled bags.

12. The end effector assembly (10) of Claim 11, wherein the placement rollers (16a, 16b, 16c) are air-filled bags.

13. The end effector assembly (10) of any of Claims 6-12, wherein the placement rollers (16a, 16b, 16c) include one or more central placement rollers (16a) located between respective first and second sets of peripheral rollers (16b, 16c), the placement rollers (16a, 16b, 16c) being arranged in a V-shaped formation, in which the or each central placement roller (16a) is located ahead of the peripheral placement rollers (16b, 16c) in a direction of progression (34) of the end effector assembly across the mould surface (22).

14. The end effector assembly (10) of Claim 13, wherein the peripheral rollers (16b, 16c) are arranged to slide against the strip (18).

15. The end effector assembly (10) of any of Claims 6-14, wherein the end effector is mounted to a robot arm or gantry.

## Patentansprüche

1. Verfahren zum Verlegen von Verbundstoff, bei dem Fasermaterialstreifen (18) jeweils fortschreitend auf einer Formfläche (22) abgelegt werden, wobei das Verfahren umfasst:
das Zuführen eines Fasermaterialstreifens (18) entlang eines Wegs, der sich von einer Einspeisung (28) des Fasermaterials bis zu einer Ausbringvorrichtung (14) für das fortschreitende Ausbringen des Streifens (18) auf der Formfläche (22) erstreckt; und
Verleihen einer Form für den Streifen (18) innerhalb des Wegs, während die Länge des Streifens (18) innerhalb des Wegs über die Breite des Streifens (18) im Wesentlichen einheitlich gehalten wird, wobei die dem Streifen (18) verliehene Form zumindest teilweise einer Form der Formfläche (22) entspricht,
wobei das Verfahren das Verleihen einer Krümmung für den Streifen (18) umfasst, wobei die Krümmung des Streifens (18) durch das Zuführen des Streifens (18) über einen Satz Formgebungsrollen erreicht wird, der eine Reihe Rollen (26a-26e) umfasst, die in einer gekrümmten Formation in eine Richtung quer zu einer Richtung (34) angeordnet sind, in der der Streifen fortschreitend auf der Formfläche (22) abgelegt wird, wodurch die Krümmung in eine Richtung quer zu einer Richtung (34), in der der Streifen fortschreitend auf der Formfläche (22) abgelegt wird, verliehen wird.

2. Verfahren nach Anspruch 1, wobei das Verfahren das Formen des Streifens (18) ohne Unterbrechung, unmittelbar bevor der Streifen in der Form (20) abgelegt wird, umfasst.

3. Verfahren nach einem der vorstehenden Ansprüche, weiter umfassend das Glätten des abgelegten Streifens (18) von seiner Mitte nach außen zu seinen Rändern hin, während er in der Form (20) abgelegt wird.

4. Verfahren nach Anspruch 3, umfassend das Vorausgehen einer mittleren Ausbringrolle (16a) der Ausbringvorrichtung (14) vor peripheren Ausbringrollen (16b, 16c) in eine Richtung der Vorwärtsbewegung (34) der Ausbringvorrichtung (14).

5. Verfahren nach einem der vorstehenden Ansprüche, weiter umfassend das Entfernen einer ersten Rückschicht (42) von dem Streifen (18) an einer Stelle entlang der Länge des Streifens (18) vor der Ausbringvorrichtung (14), an deren Stelle dem Streifen (18) Form verliehen wird.

6. Endeffektor-Baugruppe (10) zur Verwendung beim Verlegen von Verbundstoff, wobei die Baugruppe konfiguriert ist, um Fasermaterialstreifen (18) fortschreitend auf einer Formfläche (20) abzulegen, und die Baugruppe (10) umfasst:
eine Ausbringvorrichtung (14) zum Ausbringen eines Fasermaterialstreifens (18) auf der Formfläche (22); einen Zuführmechanismus zum Zuführen des Streifens (18) entlang eines Wegs, der sich von einer Einspeisung (28) des Fasermaterials zur Ausbringvorrichtung (14) erstreckt; und
eine Formgebungsvorrichtung (24), die sich innerhalb des Wegs befindet und konfiguriert ist, um dem Streifen (18) eine Form zu verleihen, während die Länge des Streifens (18) innerhalb des Wegs über die Breite des Streifens (18) im Wesentlichen einheitlich gehalten wird, wobei die dem Streifen (18) verliehene Form zumindest teilweise einer Form der Formfläche (22) entspricht, wobei die Formgebungsvorrichtung (24) konfiguriert ist, um dem Streifen (18) eine Krümmung zu verleihen, und wobei die Formgebungsvorrichtung (24) Formgebungsrollen umfasst, die eine Reihe Rollen (26a-26e) umfasst, die in einer gekrümmten Formation in eine Richtung quer zu einer Richtung (34), in der der Streifen fortschreitend auf der Formfläche (22) abgelegt wird, angeordnet sind, wobei die Rollen (26a-26e), über die der Materialstreifens (18) zugeführt wird, somit dem Streifen (18) die Krümmung in eine Richtung quer zu einer Richtung der Vorwärtsbewegung (34) der Endeffektor-Baugruppe über die Formfläche (22) verleiht.

7. Endeffektor-Baugruppe (10) nach Anspruch 6, wobei die Formgebungsrollen (26a-26e) Muldenrollen sind.

8. Endeffektor-Baugruppe (10) nach Anspruch 7, wobei die Formgebungsrollen (26a-26e) Girlanden-Muldenrollen sind.

9. Endeffektor-Baugruppe (10) nach einem der Ansprüche 6-8, wobei die Ausbringvorrichtung (14) zu einer Verlagerung in einer senkrechten Richtung zur Formfläche (22) in der Lage ist.

10. Endeffektor-Baugruppe (10) nach einem der Ansprüche 6-9, wobei die Ausbringvorrichtung (14) eine oder mehrere Ausbringrollen (16a, 16b, 16c) umfasst.

11. Endeffektor-Baugruppe (10) nach Anspruch 10, wobei die Ausbringrollen (16a, 16b, 16c) mit Flüssigkeit gefüllte Taschen umfassen.

12. Endeffektor-Baugruppe (10) nach Anspruch 11, wobei die Ausbringrollen (16a, 16b, 16c) mit Luft gefüllte Taschen sind.

13. Endeffektor-Baugruppe (10) nach einem der Ansprüche 6-12, wobei die Ausbringrollen (16a, 16b, 16c) eine oder mehrere mittlere Ausbringrollen (16a) einschließen, die sich zwischen dem jeweils ersten und zweiten Satz peripherer Rollen (16b, 16c) befinden, wobei die Ausbringrollen (16a, 16b, 16c) in V-förmiger Formation angeordnet sind, in der die bzw. jede mittlere Ausbringrolle (16a) sich vor den peripheren Ausbringrollen (16b, 16c) in einer Richtung der Vorwärtsbewegung (34) der Endeffektor-Baugruppe über die Formfläche (22) befindet.

14. Endeffektor-Baugruppe (10) nach Anspruch 13, wobei die peripheren Rollen (16b, 16c) so angeordnet sind, dass sie gegen den Streifen (18) gleiten.

15. Endeffektor-Baugruppe (10) nach einem der Ansprüche 6-14, wobei der Endeffektor auf einem Roboterarm oder Portal montiert ist.

## Revendications

1. Procédé d'assemblage de matériau composite dans lequel des bandes de matériau fibreux (18) sont déposées chacune progressivement sur une surface de moule (22), le procédé comprenant :
alimenter une bande de matériau fibreux (18) le long d'un trajet s'étendant depuis une alimentation (28) du matériau fibreux jusqu'à un dispositif de placement (14) pour placer la bande (18) progressivement sur la surface de moule (22) ; et
conférer une forme à la bande (18) dans le trajet, tout en maintenant la longueur de la bande (18) dans le trajet sensiblement uniforme sur la largeur de la bande (18), la forme conférée à la bande (18) correspondant au moins partiellement à une forme de la surface de moule (22),
ledit procédé comprenant :
conférer une courbure à la bande (18), dans lequel conférer ladite courbure à la bande (18) est effectué en alimentant la bande (18) sur un ensemble de rouleaux de mise en forme comprenant une série de rouleaux (26a-26e) ménagés en une formation en courbe dans une direction transversale à une direction (34) dans laquelle la bande est déposée progressivement sur la surface de moule (22), conférant ainsi ladite courbure dans une direction transversale à une direction (34) dans laquelle la bande est déposée progressivement sur la surface de moule (22).

2. Procédé selon la revendication 1, dans lequel le procédé comprend la mise en forme de la bande (18) en temps réel, immédiatement avant la mise en place de la bande dans le moule (20).

3. Procédé selon l'une quelconque des revendications précédentes, comprenant en outre le lissage de la bande déposée (18) vers l'extérieur depuis son centre vers ses bords lorsqu'elle est déposée dans le moule (20).

4. Procédé selon la revendication 3, comprenant l'avance d'un rouleau de placement central (16a) du dispositif de placement (14) en avant de rouleaux de placement périphériques (16b, 16c) dans une direction de progression (34) du dispositif de placement (14).

5. Procédé selon l'une quelconque des revendications précédentes, comprenant en outre l'enlèvement d'une première couche de support (42) de la bande (18) à un emplacement sur la longueur de la bande (18) en amont du dispositif de placement (14), à l'endroit où la mise en forme est conférée à la bande (18).

6. Ensemble effecteur terminal (10) destiné à être utilisé dans un assemblage composite, l'ensemble étant configuré pour déposer des bandes de matériau fibreux (18) progressivement sur une surface de moule (20), et l'ensemble (10) comprenant :
un dispositif de placement (14) pour placer une bande de matériau fibreux (18) sur la surface de moule (22) ; un mécanisme d'alimentation pour amener la bande (18) le long d'un trajet s'étendant depuis une alimentation (28) du matériau fibreux jusqu'au dispositif de placement (14) ; et
un dispositif de mise en forme (24) situé dans le trajet et configuré pour conférer une forme à la bande (18) tout en maintenant la longueur de la bande (18) dans le trajet sensiblement uniforme sur la largeur de la bande (18), dans lequel la forme conférée à la bande (18) correspondant au moins partiellement à une forme de la surface de moule (22), dans lequel le dispositif de mise en forme (24) est configuré pour conférer une courbure à la bande (18) et, dans lequel le dispositif de mise en forme (24) comprend des rouleaux de mise en forme comprenant une série de rouleaux (26a-26e) agencés selon une formation en courbe dans une direction transversale à une direction (34) dans laquelle la bande est déposée progressivement sur la surface de moule (22), lesdits rouleaux (26a-26e) sur lesquels la bande de matériau (18) est alimentée conférant ainsi ladite courbure à la bande (18) dans une direction transversale à une direction de progression (34) de l'ensemble effecteur terminal sur la surface de moule (22).

7. Ensemble effecteur terminal (10) selon la revendication 6, dans lequel les rouleaux de mise en forme (26a-26e) sont des rouleaux porteurs en auge.

8. Ensemble effecteur terminal (10) selon la revendication 7, dans lequel les rouleaux de mise en forme (26a-26e) sont des rouleaux porteurs en auge guirlandes.

9. Ensemble effecteur terminal (10) selon l'une quelconque des revendications 6 à 8, dans lequel le dispositif de placement (14) est capable de se déplacer dans une direction normale à la surface de moule (22).

10. Ensemble effecteur terminal (10) selon l'une quelconque des revendications 6 à 9, dans lequel le dispositif de placement (14) comprend un ou plusieurs rouleaux de placement (16a, 16b, 16c).

11. Ensemble effecteur terminal (10) selon la revendication 10, dans lequel les rouleaux de placement (16a, 16b, 16c) comprennent des sacs remplis de fluide.

12. Ensemble effecteur terminal (10) selon la revendication 11, dans lequel les rouleaux de placement (16a, 16b, 16c) sont des sacs remplis d'air.

13. Ensemble effecteur terminal (10) selon l'une quelconque des revendications 6 à 12, dans lequel les rouleaux de placement (16a, 16b, 16c) comprennent un ou plusieurs rouleaux de placement centraux (16a) situés entre des premier et second ensembles de rouleaux périphériques respectifs (16b, 16c), les rouleaux de placement (16a, 16b, 16c) étant disposés dans une formation en forme de V, dans laquelle le ou chaque rouleau de placement central (16a) est situé devant les rouleaux de placement périphériques (16b, 16c) dans une direction de la progression (34) de l'ensemble effecteur terminal à travers la surface de moule (22).

14. Ensemble effecteur terminal (10) selon la revendication 13, dans lequel les rouleaux périphériques (16b, 16c) sont agencés pour coulisser contre la bande (18).

15. Ensemble effecteur terminal (10) selon l'une quelconque des revendications 6 à 14, dans lequel l'effecteur terminal est monté sur un bras ou un portique de robot.
